# EUROPÄISCHE PATENTSCHRIFT

(11) **EP 2 464 886 B1**
(45) Veröffentlichungstag und Bekanntmachung des Hinweises auf die Patenterteilung: **25.10.2017**
(21) Anmeldenummer: 10721340.7
(22) Anmeldetag: 22.05.2010
(51) Int. Cl.: F16D 25/12, F16D 48/06

(54) **VERFAHREN ZUR STEUERUNG DER KÜHLMITTELZUFUHR UND DER SCHMIERMITTELZUFUHR EINER KUPPLUNG EINES KRAFTFAHRZEUGES MIT EINEM AUTOMATISCHEN SCHALTGETRIEBE**
METHOD FOR CONTROLLING THE COOLANT SUPPLY AND LUBRICANT SUPPLY TO A CLUTCH OF A MOTOR VEHICLE HAVING AN AUTOMATIC TRANSMISSION
PROCÉDÉ DE COMMANDE DE L'APPORT EN AGENT DE REFROIDISSEMENT ET DE L'APPORT EN LUBRIFIANT À L'EMBRAYAGE D'UN VÉHICULE À MOTEUR COMPRENANT UNE BOÎTE DE VITESSES AUTOMATIQUE

(30) Priorität: 14.08.2009 DE 102009037344
(43) Veröffentlichungstag der Anmeldung: 20.06.2012
(73) Patentinhaber: Volkswagen Aktiengesellschaft, 38440 Wolfsburg (DE)
(72) Erfinder: RÜTHER, Thomas, 38550 Isenbüttel (DE); KALMS, Rene, 38110 Braunschweig (DE)
(86) Internationale Anmeldenummer: PCT/EP2010/003157
(87) Internationale Veröffentlichungsnummer: WO 2010/097244

(56) Entgegenhaltungen:
- EP-A1- 1 449 707
- WO-A1-2006/007086
- DE-A1- 4 136 583
- DE-A1- 10 148 424
- DE-A1-102006 055 544
- US-A1- 2004 159 523

## Beschreibung

Die Erfindung betrifft ein Verfahren zur Steuerung einerseits der Kühlmittelzufuhr und andererseits der Schmiermittelzufuhr einer Kupplung eines Kraftfahrzeuges mit einem automatischen Schaltgetriebe, insbesondere zur Steuerung der Kühlmittelzufuhr und der Schmiermittelzufuhr einer Doppelkupplung eines automatischen Doppelkupplungsgetriebes, wobei verschiedene Betriebszustände des Schaltgetriebes über einen Wählhebel ansteuerbar sind, wobei der der Kupplung zugeführte Kühlmittelstrom im Betrieb des Kraftfahrzeuges für bestimmte Betriebszustände des Schaltgetriebes oder für bestimmte Gangwechsel innerhalb des Schaltgetriebes zeitweise unterbrochen wird, so dass eine Kühlmittelpause realisiert wird.

Im Stand der Technik sind bereits mehrere Verfahren zur Steuerung der Kühlmittelzufuhr bzw. der Schmiermittelzufuhr für die Kupplungen von Kraftfahrzeugen bekannt. So ist bspw. aus der EP 1 449 707 A1 ein Verfahren zur Steuerung der Kühlmittelzufuhr zu einer Kupplung eines Kraftfahrzeuges bekannt, bei dem der der Kupplung zugeführte Kühlmittelvolumenstrom in Abhängigkeit der Temperatur des Kühlmittels gesteuert wird. Hierbei wird zunächst die aktuelle Temperatur des Kühlmittels gemessen und in Abhängigkeit bestimmter innerhalb des Schaltgetriebes durchzuführender Schaltabläufe sowie in Abhängigkeit der aktuell gemessenen Temperatur des Kühlmittels die Kühlmittelzufuhr zur Kupplung zeitweise unterbrochen. Um in bestimmten Betriebszuständen Schleppdrehmomente zu vermeiden, wird dann nur zeitweise Kühlmittel der Kupplung zugeführt, insbesondere auf eine impuls- oder rampenförmige Art und Weise. Dieses Verfahren wird nur in Abhängigkeit des Ergebnisses der Temperaturmessung durchgeführt, d. h. es wird nur dann eine Kühlmittelpause realisiert, wenn die Temperatur einen bestimmten Grenzwert unterschreitet. Eine Schmierung der Kupplungskomponenten wird bei dem beschriebenen Verfahren nicht realisiert, sondern es wird eine Kühlmittelpause realisiert. Die EP1 449 707 A1 offenbart den Oberbegriff von Anspruch 1. So ist aus der DE 41 36 583 A1 ein Verfahren zur Steuerung der Kühlmittelzufuhr für eine Kupplung eines Kraftfahrzeuges bekannt, bei dem im Wesentlichen die Kupplung nur dann mit einem Kühlmittel, nämlich mit Kühlöl beliefert wird, wenn wärmeerzeugende Vorgänge stattfinden, die Kupplung im Übrigen aber "trocken" läuft.

Aus der EP 1 550 820 B1 ist ein Steuerverfahren für die Kühlmittelzufuhr der Kupplung eines Kraftfahrzeuges bekannt, wobei mit Hilfe einer Pumpenanordnung oder einer Flusseinstelleinrichtung über eine Steuereinrichtung ein momentaner Betriebsflüssigkeitsfluss zu den Lamellen der Kupplung eingestellt werden kann. Hierbei wird der Zufluss der Betriebsflüssigkeit zu den Lamellen in Abhängigkeit der Temperatur des Kühlmittels verkleinert oder vergrößert.

So sind im Stand der Technik weitere Verfahren bekannt (DE 10 2006 011 801 A1 bzw. US 2006/0194672 A1) bei denen einerseits die Kupplung mit einem größeren Volumenstrom gekühlt und mit einem geringeren Volumenstrom geschmiert wird. Hierbei berechnet eine Steuereinheit einerseits den Kühlmittelvolumenstrom, andererseits den Schmiermittelvolumenstrom. Es sind auch im Stand der Technik sogar durchaus Kupplungen bekannt, die mit getrennten Kreisläufen, einerseits einem Kühlmittelstrom, andererseits einem Schmiermittelstrom, ausgerüstet sind, was aber konstruktiv sehr aufwendig ist.

In der Praxis ist bei der Steuerung der Kupplung bzgl. der Kühlmittelzufuhr zunächst problematisch, dass nur soviel Kühlmittel in die Kupplung gefördert werden sollte, wie unbedingt notwendig ist, damit unnötige Pumpen- und Schleppverluste (durch in der Kupplung verweilendes Kühlmittel entstehende Schleppmomente) vermieden werden und damit - im Endeffekt - auch Kraftstoff eingespart werden kann. Nichts desto trotz muss, wenn nur ein Kühlmittelkreislauf für die Kühlung und die Schmierung einer Kupplung vorliegt, auch darauf geachtet werden, dass die Komponenten der Kupplung immer auch genug geschmiert werden, damit diese nicht beschädigt werden. Der Steuerungsaufwand zur Steuerung einerseits der Kühlmittelzufuhr und andererseits der Schmiermittelzufuhr zu einer Kupplung eines Kraftfahrzeugs ist daher sehr komplex, teils sehr konstruktionsaufwendig sowie mit den entsprechenden hohen Kosten verbunden.

Der Erfindung liegt daher die Aufgabe zugrunde, die bekannte Steuerung für die Kühlmittelzufuhr bzw. für die Schmiermittelzufuhr zu einer Kupplung eines Kraftfahrzeuges derart auszugestalten und weiterzubilden, dass möglichst wenig Pumpenverluste und Schleppverluste, insbesondere Schleppmomente innerhalb der Kupplung, auftreten sowie andererseits eine Beschädigung der Komponenten der Kupplung und der damit einhergehenden Kosten vermieden sind.

Die zuvor aufgezeigte Aufgabe ist nun dadurch gelöst, dass auch die Steuerung der Schmiermittelzufuhr der Kupplung realisiert wird, nämlich dass die Kühlung und die Schmierung der Kupplung mit dem gleichen Flüssigkeitsmittel, nämlich mit dem Kühlmittel, insbesondere einem Kühlöl, aus einem einzigen Kühlmittelkreislauf erfolgt, dass, wenn der Schalthebel bzw. Wählhebel sich in der Position für die Parksperre (P) oder sich in der Position für die Neutralstellung (N) befindet, und der entsprechende Betriebszustand im Schaltgetriebe realisiert ist bei dem die entsprechende Kupplung geöffnet ist, oder dass, wenn bestimmte Gangstufenwechsel innerhalb des Schaltgetriebes realisiert werden und die hierfür erforderlichen Gangsteller-Aktionen im Schaltgetriebe durchgeführt werden bei dem die entsprechende Kupplung geöffnet ist, dann eine Kühlmittelpause realisiert wird und der Kupplung kein in wirksamer Menge zur Kühlung vorgesehener Flüssigkeitsmittelvolumenstrom innerhalb der Kühlmittelpause zugeführt wird, aber während dieser Kühlmittelpause zur Schmierung der Kupplungskomponenten zumindest zeitweise eine rampen- oder impulsförmige Zuführung eines Flüssigkeitsmittelvolumenstromes zur Schmierung der Kupplungskomponenten realisiert ist.

Durch die Kombination dieser Merkmale werden die eingangs genannten Nachteile vermieden und entsprechende erhebliche Vorteile erzielt. Insbesondere ist nun zunächst ein einziger Flüssigkeitsmittelkreislauf, hier nun ein Kühlmittelkreislauf vorgesehen, der einerseits die Kühlung der Kupplung, andererseits aber auch die Schmierung der Kupplung, also der Kupplungskomponenten, realisiert, d. h. die Kühlung und die Schmierung der Kupplung erfolgt mit dem gleichen Kreislauf, nämlich dem Flüssigkeitsmittel aus ein und dem gleichen Kühlmittelkreislauf. Dies hat zunächst den Vorteil, dass kein separater Schmiermittelkreislauf vorgesehen werden muss. Bei der bevorzugten Ausführungsform der Erfindung ist nun ein gemeinsamer Kühlmittelkreislauf, insbesondere Kühlölkreislauf, für die Kupplung, die Hydraulik und das Getriebe vorgesehen. Von besonderem Vorteil ist, dass vorzugsweise nur genau soviel Flüssigkeitsmittel während einer Kühlmittelpause der Kupplung zur Schmierung der Kupplungskomponenten zugeführt wird, wie unbedingt notwendig ist, damit unnötige in der Kupplung möglicherweise entstehende Schleppmomente vermieden werden, insbesondere damit auch Pumpenleistung im Kühlmittelkreislauf eingespart werden kann, was wiederum zu einer entsprechenden Kraftstoffeinsparung führt. Insbesondere auch durch die rampen- oder impulsförmige Zuführung von Flüssigkeitsmittel zur Schmierung der Kupplungskomponenten werden die Schleppmomente innerhalb der Kupplung extrem reduziert bzw. vorzugsweise vollständig vermieden, so dass komfortable Gangstufenwechsel innerhalb des Schaltgetriebes bei bestimmten Gangsteller-Aktionen ermöglicht sind oder auch für bestimmte Betriebszustände des Getriebes (Parksperre oder Neutralstellung) die notwendige Pumpenleistung für den Kühlmittelkreislauf reduziert ist und daher entsprechend Energie/Kraftstoff eingespart werden kann. Im Ergebnis sind die eingangs genannten Nachteile vermieden und entsprechende Vorteile erzielt.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden werden nun bevorzugte Ausführungsbeispiele der Erfindung anhand der nachfolgenden Beschreibung sowie der nachfolgenden Zeichnung näher erörtert. In der Zeichnung zeigt:
- Fig. 1: in einer schematischen Darstellung für den Zustand des Wählhebels in der Position P (Parksperre) oder in der Position N (Neutralstellung), also für den entsprechenden Betriebszustand Parksperre oder Neutralstellung des Schaltgetriebes eine Schmierung der Kupplungskomponenten während einer Kühlmittelpause, nämlich den Flüssigkeitsmittelvolumenstrom Q zur Schmierung der Kupplungskomponenten bei einer ersten bestimmten Kühlmitteltemperatur (T₁),
- Fig. 2: in einer schematischen Darstellung - ähnlich der Darstellung in Fig. 1 - den entsprechenden Verlauf des Flüssigkeitsmittelvolumenstromes Q zur Schmierung der Kupplungskomponenten bei einer anderen zweiten spezifischen, höheren, Kühlmitteltemperatur (T₂),
- Fig. 3: in einer schematischen Darstellung die Schmierung der Kupplungskomponenten, nämlich den Flüssigkeitsmittelvolumenstrom Q in einer Kühlmittelpause während bestimmter Gangsteller-Aktionen im Getriebe, und
- Fig. 4a bis 4c: die Kennfelder unterschiedlicher Parameter in Abhängigkeit der Temperatur T_{Öl} des zur Verfügung stehenden Flüssigkeitsmittelvolumenstromes im Kühlmittelkreislauf, hier eines Kühlöles in schematischer, graphischer Darstellung.

Das im folgenden geschilderte Verfahren zur Steuerung einerseits der Kühlmittelzufuhr und andererseits der Schmiermittelzufuhr einer Kupplung eines Kraftfahrzeugs mit einem automatischen Schaltgetriebe ist insbesondere zur Steuerung der Kühlmittelzufuhr und der Schmiermittelzufuhr zu einer Doppelkupplung eines automatischen Doppelkupplungsgetriebes geeignet bzw. vorgesehen.

Hierbei sind verschiedene Betriebszustände des Schaltgetriebes über einen Schalthebel ansteuerbar, bspw. die Betriebszustände Parksperre P, Rückwärtsfahrt R, Neutralstellung N, Vorwärtsfahrt D bzw. weitere spezifische, hier nicht näher genannte Fahr- bzw. Betriebszustände.

Der der Kupplung zugeführte Kühlmittelstrom wird im Betrieb des Kraftfahrzeuges für bestimmte Betriebszustände des Schaltgetriebes oder für bestimmte Gangwechsel innerhalb des Schaltgetriebes zeitweise unterbrochen, so dass eine Kühlmittelpause realisiert wird. Dies hat zunächst den Sinn und Zweck, dass unnötige Schleppmomente innerhalb der Kupplung, nämlich wenn sich insbesondere Kühlmittel innerhalb der Kupplung befindet, vermieden werden können, wobei gleichzeitig eine entsprechende Pumpenleistung reduziert ist. Hierfür existieren bereits die im eingangs geschilderten im Stand der Technik bekannten Verfahren.

Die eingangs genannten Nachteile sind nun dadurch vermieden, dass die Kühlung und die Schmierung der Kupplung mit dem gleichen Flüssigkeitsmittel, nämlich mit einem Kühlmittel, insbesondere einem Kühlöl, aus einem einzigen Kühlmittelkreislauf erfolgt, dass, wenn der Wählhebel sich in der Position für die Parksperre P oder sich in der Position für die Neutralstellung N befindet und der entsprechende Betriebszustand im Schaltgetriebe realisiert ist, oder dass, wenn bestimmte Gangstufenwechsel innerhalb des Schaltgetriebes realisiert werden und die hierfür erforderlichen Gangsteller-Aktionen im Schaltgetriebe durchgeführt werden, dann eine Kühlmittelpause realisiert wird und der Kupplung kein in wirksamer Menge zur Kühlung vorgesehener Flüssigkeitsmittelvolumenstrom innerhalb der Kühlmittelpause zugeführt wird, aber während dieser Kühlmittelpause zur Schmierung der Kupplungskomponenten zumindest zeitweise eine rampen- oder impulsförmige Zuführung eines Flüssigkeitsmittelvolumenstromes zur Schmierung der Kupplungskomponenten realisiert ist. Hierbei beginnt ein in wirksamer Menge zur Kühlung vorgesehener Flüssigkeitsmittelvolumenstrom (Kühlmittelstrom) bei im wesentlichen 3 l/min, liegt insbesondere im Bereich von 3 l/min bis 30 l/min, wobei ein für die Schmierung realisierter Flüssigkeitsvolumenstrom (Schmiermittelstrom) insbesondere im Bereich von 0,5 l/min bis 1 l/min, vorzugsweise von 0,3 l/min bis 1,5 l/min liegt. Hierbei wird vorzugsweise als Flüssigkeitsmittel ein Kühlöl mit einer Wärmekapazität im Bereich von 1400 KJ/ (m³ k) bis 1900 KJ (m³ k) verwendet. Durch das erfindungsgemäße Verfahren werden nunmehr entscheidende Vorteile erzielt:
Zunächst kann nun ein gemeinsamer Kühlmittelkreislauf, insbesondere ein Kühlölkreislauf für die Kupplung, für das Schaltgetriebe sowie für die gesamte Hydraulik, insbesondere auch einschließlich der Mechatronik vorgesehen werden. Insbesondere in einem Doppelkupplungsgetriebe nimmt nun das Kühlmittel, insbesondere das Kühlöl neben seinen Funktionen der Getriebeschmierung und hydraulischen Betätigung auch die Kühlung und die Schmierung der Kupplung als Funktion wahr. Insbesondere bei einer Doppelkupplung besteht aufgrund deutlich höherer Motormomente bei einem Doppelkupplungsgetriebe ein durchaus höherer Kühlmittelbedarf als bei anderen Schaltgetrieben. Im Gegensatz zu anderen Getrieben, in den die Kühlmittelströme für die Schmierung und Kühlung des Getriebes und die Kupplungskühlung parallel geschaltet sind, kann nun eine Reihenschaltung der Kühlmittelströme mit einem einzigen Kühlmittelkreislauf realisiert werden, was auch zur Folge hat, dass der Kühlmittelvolumenstrom entsprechend vergrößert ist.

Insbesondere bei einer Doppelkupplung fließt der Kühlmittelvolumenstrom zunächst durch die radial innere und dann durch die radial äußere Kupplung. Hierbei wird besonders darauf geachtet, dass eine gute Kühlmittelverteilung infolge gleichmäßiger Durchströmung aller Lamellen gewährleistet ist. Für die Anordnung der Kühlmittelpumpe, insbesondere der Ölpumpe, wird im Inneren des Schaltgetriebes eine Anordnung gewählt, die Vorteile für den Bauraum bietet. Hierbei wird vorzugsweise die Kühlmittelpumpe von einem Zahnrad angetrieben, das auf der Kupplungshauptnabe zwischen der Drehdurchführung und dem Kupplungskörper sitzt.

Zur Steuerung des Kühlmittelstromes bzw. des Flüssigkeitsmittelvolumenstromes sind entsprechende Ventile und in einem Steuergerät abgelegte Steuerstrategien und/oder Kennfelder vorgesehen. Insbesondere wird mit einem sehr präzise einstellbaren Proportionalventil der entsprechende "Kühlmittelstrom" bzw. der entsprechende "Schmiermittelstrom" in der Kupplung, also der jeweilige spezifische Flüssigkeitsmittelvolumenstrom realisiert, insbesondere mit dem Ziel, die entsprechenden Schleppmomente der Kupplung für bestimmte Fahr- und/oder Betriebszustände entsprechend zu reduzieren.

Hierzu wird die in die Kupplung vorzugsweise in die Doppelkupplung eingetragene Leistung und Arbeit permanent vom Steuergerät berechnet. Zusätzlich erfasst ein Sensor die aktuelle Temperatur des Schleuderöls und damit den Zustand der Wärmeverhältnisse innerhalb der Kupplung, insbesondere innerhalb der Doppelkupplung. Auf Basis dieser Werte wird dann stets ein passender Flüssigkeitsmittelvolumenstrom eingestellt, wobei für bestimmte Betriebszustände, nämlich dann, wenn die Parksperre P oder die Neutralstellung N im Schaltgetriebe realisiert ist, oder vorzugsweise wenn bei bestimmten Gangstufenwechseln/Betriebszuständen die beiden Kupplungen der Doppelkupplung geöffnet oder nicht vollständig geschlossen sind und daher eine Kühlung dieser Kupplungen in diesem Augenblick eben nicht unbedingt erforderlich ist, weil zum Beispiel nur noch erforderliche Gangsteller-Aktionen im Schaltgetriebe durchgeführt werden müssen, dann zunächst eine Kühlmittelpause realisiert, aber - nach wie vor - eine Schmierung der Kupplungskomponenten im Getriebe über die Zuführung dieses passenden Flüssigkeitsmittelvolumenstromes realisiert. Hierzu darf im Folgenden nun Näheres ausgeführt werden:

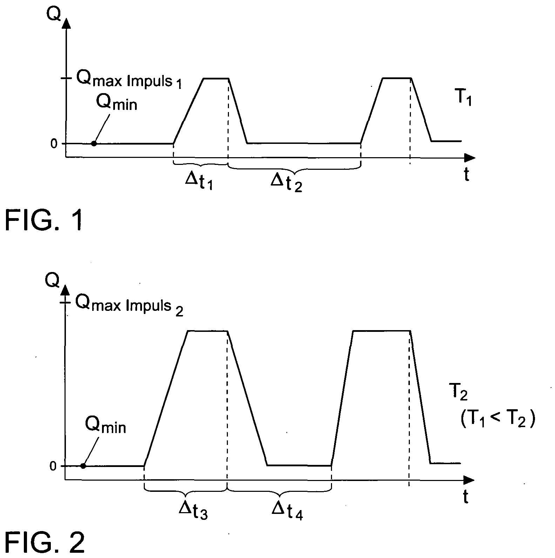

So zeigt die Fig. 1 und die Fig. 2 einen Flüssigkeitsmittelvolumenstrom zur Schmierung der Komponenten einer Kupplung in Abhängigkeit von unterschiedlichen Temperaturen T₁ bzw. T₂ des verwendeten Flüssigkeitsmittels.

So zeigt die Fig. 1 den Flüssigkeitsmittelvolumenstrom zur Schmierung der Kupplungskomponenten bei einer ersten Temperatur T₁ und die Fig. 2 den Flüssigkeitsmittelvolumenstrom bei einer zweiten Temperatur T₂, wobei gilt T₁ < T₂.

Für die in den Fig. 1 und 2 dargestellten Fälle steht der Wählhebel in der Stellung für die Parksperre P oder für die Neutralstellung N, wobei damit auch der entsprechende Betriebszustand im automatischen Schaltgetriebe realisiert ist. Denkbar ist auch, dass diese Zustände im Schaltgetriebe nicht über einen Wählhebel, sondern über Betätigungselemente wie bspw. Betätigungsknöpfe eingelegt werden.

Dies bedeutet nun aber grundsätzlich, dass hier die Kupplung, vorzugsweise bei einer Doppelkupplung, vorzugsweise beide entsprechenden Kupplungen in dem Betriebszustand der Parksperre P oder der Neutralstellung N geöffnet sind. Dies bedeutet weiterhin, dass in diesen Betriebszuständen im Allgemeinen eine Kühlung der Kupplung nicht erforderlich ist, da die Kupplung eben geöffnet und nicht geschlossen ist, also hier keine Reibleistung über die entsprechenden Kupplungslamellen übertragen wird. In den Wählhebelstellungen P und N ist "im Normalzustand" zunächst daher keine Kühlung der Kupplung notwendig. Um ein Trockenlaufen der Kupplungslager zu verhindern, ist es aber notwendig, diese in applizierbaren Zeitabständen zu schmieren. Da sich der Bedarf zur Schmierung der Kupplung mit der Drehzahl der Kupplung erhöht, gibt es eine applizierbare Motordrehzahlschwelle, oberhalb derer keine Schmierung mehr zulässig ist und daher dann wieder zur "normalen Kühlung" umgeschaltet wird, wenn diese Drehzahlschwelle überschritten wird. Hierbei kann dann in diesem Betriebszustand bspw. auch anhand der Schleuderöltemperatur festgestellt bzw. entschieden werden, ob eine Kühlung der Kupplung erforderlich ist bzw. ob eine ausschließliche Schmierung erlaubt ist. Da der Motor an ist und mit einer bestimmten Motordrehzahl läuft, dreht sich die entsprechende antriebsseitige Scheibe der jeweiligen Kupplung, und um eine Beschädigung der Kupplungskomponenten zu vermeiden, müssen diese geschmiert werden. Diese Schmierung der Kupplungskomponenten, ohne dass ein zur Kühlung vorgesehener Flüssigkeitsmittelvolumenstrom realisiert wird, sondern nur ein für die Schmierung entsprechender Flüssigkeitsmittelvolumenstrom realisiert wird, darf im Folgenden beschrieben werden:
So zeigen die Fig. 1 und 2 eine hier in den Wählhebelstellungen P oder N realisierte Kühlmittelpause, d.h. es wird kein in wirksamer Menge zur Kühlung vorgesehener Flüssigkeitsmittelvolumenstrom realisiert, sondern nur ein Flüssigkeitsmittelvolumenstrom zur Schmierung der Kupplungskomponenten, dies aber auch noch in einer spezifischen Art und Weise, nämlich über eine rampen- oder impulsförmige Zuführung von Flüssigkeitsmittel während der Kühlmittelpause.

Gut zu erkennen in den Fig. 1 und 2 ist hier der Flüssigkeitsmittelvolumenstrom Q zur Schmierung der Kupplungskomponenten, aufgetragen über der Zeit t während einer Kühlmittelpause für die Wählhebelstellung P oder N. Dadurch, dass nun die Schmierung der Kupplungskomponenten über eine rampen- oder impulsförmige Zuführung von Flüssigkeitsmittel realisiert wird, werden die innerhalb der Kupplung entstehenden Schleppmomente entsprechend verringert bzw. ganz vermieden. Hierbei ist der spezifische Flüssigkeitsmittelvolumenstrom Q in der Kühlmittelpause zur Schmierung der Komponenten der Kupplung abhängig von verschiedenen Parametern, insbesondere von der Impulslänge, der Impulshöhe sowie der Frequenz (Impulszeit bzw. Pausenzeit zwischen den Impulsen) und der aktuellen Kühlmitteltemperatur T (T₁ bzw. T₂).

So zeigt die Fig. 1 in schematischer Darstellung die Impulsbreiten und die Impulshöhen für die Flüssigkeitsmittelvolumenströme Q bei einer bestimmten aktuellen Temperatur T₁ des Flüssigkeitsmittels und die Fig. 2 die entsprechenden schematischen Darstellungen der Impulse, also den entsprechenden Flüssigkeitsvolumenstrom Q des Flüssigkeitsmittels bei der Temperatur T₂, wobei T₁ < T₂.

Es ist deutlich zu erkennen, dass einerseits die Höhe Qₘₐₓ der Impulse in Fig. 2, also für den Fall T₂ > T₁ die maximale Impulshöhe Q_{max Impuls 2} einerseits größer ist als Q_{max Impuls 1} in Fig. 1, wie auch die Impulslänge (Impulszeit) wesentlich größer ist (Δt₃ > Δt₁). Weiterhin ist die Pausenzeit zwischen den Impulsen in Fig. 2 geringer (Δt₄ < Δt₂), d.h. die Impulsfrequenz in Fig. 2 ist höher als die Impulsfrequenz in Fig. 1. Es wird also in Fig. 2 mehr Flüssigkeitsmittel zur Verfügung gestellt als in Fig. 1. Die Fig. 1 und die Fig. 2 zeigen hier, dass der "Impuls Qₘᵢₙ" zu "Null" gesetzt werden kann, insbesondere hierdurch dann entsprechende Pausenzeiten zwischen den Impulsen während einer Kühlmittelpause realisiert werden können.

Der spezifische Flüssigkeitsmittelvolumenstrom zur Schmierung der Kupplungskomponenten wird nun über ein entsprechendes Steuergerät berechnet. Das Steuergerät weist vorzugsweise einen Mikroprozessor und/oder eine entsprechende Speichereinheit und/oder verschiedene weitere Rechnereinheiten auf und kann auf elektronischer und/oder elektrischer Basis realisiert sein. Dies ist abhängig vom jeweiligen Anwendungsfall. Es ist durchaus möglich, dass nach einer starken Belastung der Kupplungen, wenn bspw. direkt nach einer extrem starken Belastung (bspw. in der Vorwärtsfahrt D) dann in die Wählhebelstellung P oder N gewechselt wird, eben nicht direkt eine Kühlmittelpause realisiert wird, sondern zeitlich versetzt erst später. Dies wird insbesondere mit Hilfe des zuvor genannten Steuergerätes berechnet. Es kann sein, dass in einem derartigen Fall vorzugsweise die Kupplungen einer Doppelkupplung weiterhin "nachgekühlt" werden müssen, um die gespeicherte Wärme aus den Kupplungen abzuführen. Hierzu dient der zuvor genannte Schleuderöltemperaturregler, um auch das Nachkühlen der entsprechenden Kupplungen sicherzustellen. Es wird daher mit Hilfe des Steuergerätes zuvor berechnet, ob eine Kühlmittelpause realisiert werden kann und für den Fall - bejahendenfalls - dann die Kühlmittelpause realisiert wird, um dann die entsprechende "Impulsschmierung", die hier beispielhaft an den Fig. 1 und 2 erläutert worden ist, entsprechend zu realisieren. Insbesondere bei einer Nachkühlung werden die Impulse für die Impulsschmierung zunächst im Steuergerät virtuell berechnet, während noch die Nachkühlung in der Kupplung, also ein Kühlmittelvolumenstrom realisiert wird. Permanent werden die maximalen Werte, einerseits die virtuell berechneten Impulse Q_{max Impuls} für die Schmierung berechnet und mit dem aktuellen Wert des Kühlmittelvolumenstromes verglichen. Erst wenn gilt, dass der aktuell berechnete Wert Q_{max Impuls} größer ist als der aktuelle Wert des reinen Kühlmittelvolumenstromes, wird in den Modus für den Schmiermittelstrom geschaltet und dann die Schmierung mit dem dann tatsächlich realisierten Impulsen durchgeführt.

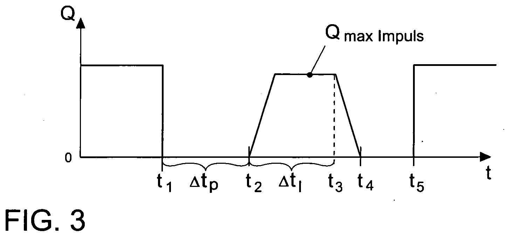

So zeigt Fig. 3 den weiteren Fall der Realisierung einer Kühlmittelpause während spezifischer Gangsteller-Aktionen im automatischen Schaltgetriebe, wobei die entsprechende Kupplung, insbesondere diejenige Kupplung bei einer Doppelkupplung die in diesen Gangsteller-Aktionen zugeordnet ist, vorzugsweise geöffnet ist, also eben nicht mit einem Kühlmittelstrom gekühlt werden muss. Gut zu erkennen in Fig. 3 ist hier die realisierte Kühlmittelpause zwischen einem Zeitpunkt t₁ und einem Zeitpunkt t₅. Zwischen den Zeitpunkten t₁ und t₅, nämlich innerhalb der Kühlmittelpause wird nun zumindest eine, vorzugsweise auch mehrere, dies ist abhängig vom jeweiligen Anwendungsfall, rampen- oder impulsförmige Zuführung von Flüssigkeitsmittel zur Schmierung der Komponenten der Kupplung realisiert. Dies ist in Fig. 3 gut zu erkennen, nämlich hier über die rampenförmige oder impulsförmige Zuführung von Flüssigkeitsmittel zwischen dem Zeitpunkt t₂ und dem Zeitpunkt t₄. Hierbei wird bei der rampenförmigen Zuführung der Beginn der Anfangsrampe durch den Zeitpunkt t₂ und das Ende der Zuführung des Flüssigkeitsmittelstromes Q durch den Zeitpunkt t₄ definiert. Weiterhin wird bei der rampenförmigen Zuführung der Beginn der Endrampe durch den Zeitpunkt t₃ und das Ende der Endrampe durch ein Zeitpunkt t₄ definiert, so wie aus Fig. 3 ersichtlich. Hierbei werden der Abstand Δtₚ, die Höhe des Impulses Q_{max Impuls}, sowie der Gradient der jeweiligen Anfangsrampe oder der Endrampe und die Impulszeit Δtₗ mit Hilfe eines Steuergerätes berechnet und realisiert.

So zeigt Fig. 3 im Zeitpunkt t₁ den Start der Kühlmittelpause, zwischen den Zeitpunkten t₁ bis t₅ daher die entsprechende Zeitperiode ohne die Zuführung von für eine Kühlung notwendigen Flüssigkeitsmittel, aber die Zuführung von für die Schmierung notwendigem Flüssigkeitsmittel, insbesondere die Zuführung von Kühlöl, im Zeitpunkt t₂ mit dem Start der Flüssigkeitsmittelrampe mit einem parametrierbaren Gradienten und als Zeitpunkt t₃ das Ende des maximalen Schmierimpulses, hier dann den Beginn des Abbaus mit einem parametrierbaren Gradienten. Die Gesamtdauer des Schmierimpulses ist die Periode zwischen den Zeitpunkten t₂ bis t₄, wobei t₅ dann das Ende der Kühlmittelpause markiert. Es ist prinzipiell möglich in der Zeit t₁ bis t₅ mehrere Flüssigkeitsmittelimpulse zu realisieren, das ist abhängig vom Anwendungsfall und der Gesamtdauer der Kühlmittelpause.

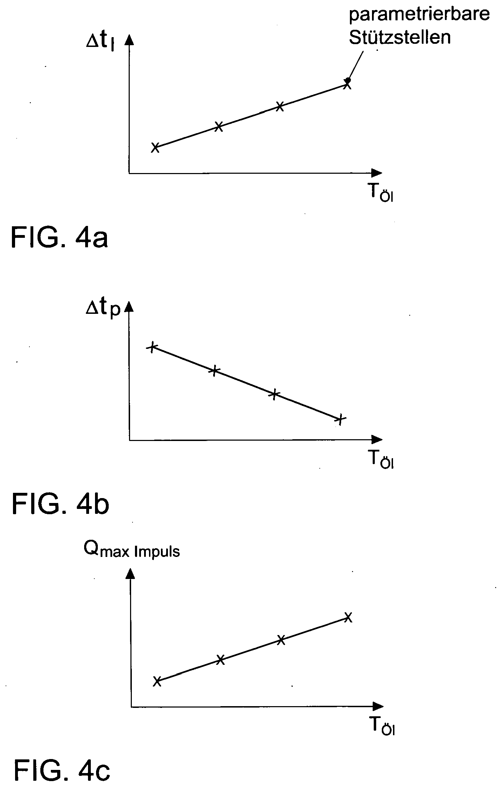

So ist es auch zweckmäßig, dass die einzelnen unterschiedlichen, teilweise oben genannten Parameter in spezifischen Kennfeldern in Abhängigkeit der Temperatur T_{Öl} des Flüssigkeitsmittels im Kühlkreislauf abgespeichert sind. Fig. 4a bis 4c zeigen graphisch dargestellt die Abhängigkeit der Parameter zu der der aktuell im Kreislauf anliegenden Temperatur T_{Öl} des Flüssigkeitsmittels, hier die dargestellten Parametern Δtₗ, Δtₚ und Q_{max Impuls}. So zeigt die Fig. 4a die Impulszeit Δtₗ in Abhängigkeit der Temperatur T_{Öl} sowie die Fig. 4b die Abhängigkeit der Pausenzeit Δtₚ bis zum Einsatz des ersten Impulses und in Fig. 4c die Abhängigkeit der maximalen Höhe des Impulses Q_{max Impuls} entsprechend schematisch dargestellt ist, jeweils in Abhängigkeit der oben genannten Temperatur T_{Öl}, die zu den gegebenen Betriebszuständen aktuell im Kühlkreislauf anliegt.

Mit Hilfe des Steuergerätes wird vorzugsweise die in der Kupplung bzw. in den Kupplungen umgesetzte Reibleistung und in Abhängigkeit einer aufsummierten Gesamtreibleistung (Energieintegral) berechnet, wobei vorzugsweise im Falle einer Kühlung die durch die Kühlung abgeführte Wärme als "äquivalente Reibleistung" wieder subtrahiert wird. In Abhängigkeit vom bestimmten abrufbaren und/oder abgespeicherten Grenzwerten wird dann in bestimmten oben beschriebenen Betriebszuständen des automatischen Schaltgetriebes eine Kühlmittelpause realisiert, insbesondere begonnen oder beendet, wobei zusätzlich mit Hilfe des Steuergerätes dann die entsprechende rampen- oder impulsförmige Zuführung von Flüssigkeitsmittel zur Schmierung der Kupplungskomponenten innerhalb dieser Kühlmittelpause durchgeführt wird. So wird dann für den Fall, dass das Energieintegral einen bestimmten Grenzwert überschreitet keine Kühlmittelpause zugelassen. Für den Fall, dass das Energieintegral einen bestimmten Grenzwert unterschreitet, wird die Kühlmittelpause realisiert.

Durch das erfindungsgemäße Verfahren findet in den Wählhebelstellungen P und N eine Schmierung der Kupplungskomponenten statt, da im Allgemeinen hier keine Kühlung notwendig ist. Aufgrund der Schmierung während der Kühlölpausen wird aber ein Trockenlaufen der Kupplungslager verhindert, wobei die Lager in applizierbaren Zeitabständen mit Hilfe der Schmierimpulse geschmiert werden.

Bei bestimmten Gangsteller-Aktionen, insbesondere vor dem Einlegen eines Ganges, kann, insbesondere um Schleppmomente zu vermeiden die Anforderung einer Kühlmittelpause mit Hilfe des Steuergerätes realisiert werden. Aber auch während dieser Kühlmittelpausen erfolgt eine Schmierung wie oben geschildert.

Während der Kühlmittelpausen wird die gesamte Reibleistung der Kupplung aufsummiert, aber immer vorzugsweise auch in Abhängigkeit vom bestehenden, zur Schmierung notwendigen Flüssigkeitsmittelvolumenstrom wieder abgebaut. Überschreitet dieses Wärmeintegral dann einen applizierbaren Wert, so sind keine Kühlmittelpausen mehr zulässig, und es wird dann in den Zustand der normalen Kühlung gewechselt, also keine Kühlmittelpausen mehr zugelassen. Hierüber ist mit Hilfe des Steuergerätes dann auch eine entsprechende Sicherheitsfunktion realisiert.

Die Dauer der jeweiligen Kühlmittelpause ist insbesondere auch abhängig von der "Mechatroniköltemperatur" und der in den Kupplungen aktuell umgesetzten Leistungen, wobei die Dauer der jeweiligen Kühlmittelpause dann aus einem applizierbaren/abgespeicherten Kennfeld ermittelt wird.

Das erfindungsgemäße Verfahren ist daher für verschiedene Betriebszustände des Schaltgetriebes und bestimmte Gangsteller-Aktionen anwendbar und vermeidet Schleppmomente innerhalb einer Kupplung, so dass komfortable Schaltungen und Energieeinsparungen ermöglicht sind.

## Patentansprüche

1. Verfahren zur Steuerung der Kühlmittelzufuhr einer Kupplung eines Kraftfahrzeuges mit einem automatischen Schaltgetriebe, insbesondere zur Steuerung der Kühlmittelzufuhr einer Doppelkupplung eines automatischen Doppelkupplungsgetriebes, wobei verschiedene Betriebszustände des Schaltgetriebes über einen Wählhebel ansteuerbar sind, wobei der der Kupplung zugeführte Kühlmittelstrom im Betrieb des Kraftfahrzeuges für bestimmte Betriebszustände des Schaltgetriebes oder für bestimmte Gangwechsel innerhalb des Schaltgetriebes zeitweise unterbrochen wird, so dass eine Kühlmittelpause realisiert wird, **dadurch gekennzeichnet, dass** auch die Steuerung der Schmiermittelzufuhr der Kupplung realisiert wird, nämlich dass die Kühlung und die Schmierung der Kupplung mit dem gleichen Flüssigkeitsmittel, nämlich mitdem Kühlmittel, insbesondere einem Kühlöl, aus einem einzigen Kühlmittelkreislauf erfolgt, dass, wenn der Wählhebel sich in der Position für die Parksperre (P) oder sich in der Position für die Neutralstellung (N) befindet und der entsprechende Betriebszustand im Schaltgetriebe realisiert ist bei dem die entsprechende Kupplung geöffnet ist, oder wenn bestimmte Gangstufenwechsel innerhalb des Schaltgetriebes realisiert werden und die hierfür erforderlichen Gangsteller-Aktionen im Schaltgetriebe durchgeführt werden bei denen die entsprechende Kupplung geöffnet ist, dann eine Kühlmittelpause realisiert wird und der Kupplung kein in wirksamer Menge zur Kühlung vorgesehener Flüssigkeitsmittelvolumenstrom innerhalb der Kühlmittelpause zugeführt wird, aber während dieser Kühlmittelpause zur Schmierung der Kupplungskomponenten - zumindest zeitweise - eine rampen- oder impulsförmige Zuführung eines Flüssigkeitsmittelvolumenstromes (Q) zur Schmierung der Kupplungskomponenten realisiert ist.

2. Verfahren nach Anspruch 1, **dadurch gekennzeichnet, dass** der spezifische impulsförmige Flüssigkeitsmittelvolumenstrom (Q) in der Kühlmittelpause zur Schmierung der Komponenten abhängig ist von verschiedenen Parametern, insbesondere von der Impulslänge, der Impulshöhe sowie der Frequenz und/oder der aktuellen Kühlmitteltemperatur ("Mechatroniköltemperatur").

3. Verfahren nach Anspruch 2, **dadurch gekennzeichnet, dass** die einzelnen unterschiedlichen Parameter in spezifischen Kennfeldern in Abhängigkeit der Temperatur des Kühlmittels, insbesondere eines Kühlöles (T_{Öl}), abgespeichert sind.

4. Verfahren nach einem der vorstehenden Ansprüche, **dadurch gekennzeichnet, dass** die Kühlmittelpause zwischen einem Zeitpunkt t₁ und einem Zeitpunkt t₅ realisiert wird.

5. Verfahren nach Anspruch 4 **dadurch gekennzeichnet, dass** zwischen dem Zeitpunkt t₁ und dem Zeitpunkt t₅, nämlich innerhalb der Kühlmittelpause zumindest eine Zuführung vorzugsweise mehrere rampen- oder impulsförmige Zuführungen von einem Flüssigkeitsmittelvolumenstrom (Q) zur Schmierung der Komponenten realisiert werden.

6. Verfahren nach einem der vorstehenden Ansprüche, **dadurch gekennzeichnet, dass** eine rampenförmige oder impulsförmige Zuführung von Flüssigkeitsmittel zwischen einem Zeitpunkt t₂ und einem Zeitpunkt t₄ erfolgt.

7. Verfahren nach einem der vorstehenden Ansprüche, **dadurch gekennzeichnet, dass** bei einer rampen- und impulsartigen Zuführung der Beginn der Anfangsrampe durch den Zeitpunkt t₂ und das Ende der Zuführung des maximalen Flüssigkeitsvolumenstromes (Q_{max Impuls}) durch den Zeitpunkt t₃ definiert ist.

8. Verfahren nach einem der vorstehenden Ansprüche, **dadurch gekennzeichnet, dass** bei einem rampenförmigen Impuls der Beginn einer Endrampe durch den Zeitpunkt t₃ und das Ende der Endrampe durch den Zeitpunkt t₄ definiert ist.

9. Verfahren nach einem der vorstehenden Ansprüche, **dadurch gekennzeichnet, dass** der Abstand (Δt_{P}), die Höhe des Impulses (Q_{max Impuls}) sowie der Gradient der jeweiligen Anfangs- oder der Endrampe mit Hilfe eines Steuergerätes berechnet und realisiert werden.

10. Verfahren nach einem der vorstehenden Ansprüche, **dadurch gekennzeichnet, dass** mit Hilfe des Steuergerätes die in der Kupplung bzw. in den Kupplungen umgesetzten Reibleistungen fortlaufend berechnet werden und in Abhängigkeit einer aufsummierten Gesamtreibleistung abzüglich der abgeführten Wärmemenge und in Abhängigkeit bestimmter abgespeicherter Grenzwerte mit Hilfe des Steuergerätes eine Kühlmittelpause realisiert wird, insbesondere begonnen und auch beendet wird.

## Claims

1. Method for controlling the coolant supply to a clutch of a motor vehicle having an automatic gearbox, in particular for controlling the coolant supply to a dual clutch of an automatic dual-clutch transmission, wherein different operating states of the gearbox can be actuated by means of a selector lever, wherein the coolant flow supplied to the clutch is temporarily interrupted during operation of the motor vehicle for specific operating states of the gearbox or for specific gear changes within the gearbox, so that a coolant interval is realized, **characterized in that** control of the lubricant supply to the clutch is also realized, specifically **in that** cooling and lubrication of the clutch are performed by the same liquid agent, specifically by the coolant, in particular a cooling oil, from a single coolant circuit, **in that**, when the selector lever is in the position for the parking lock (P) or in the position for the neutral setting (N) and the corresponding operating state is realized in the gearbox, in which the corresponding clutch is open, or when specific gear stage changes are realized within the gearbox and the gear actuator actions required for this purpose are carried out in the gearbox, in the case of which the corresponding clutch is open, a coolant interval is realized and the clutch is not supplied with liquid agent volume flow provided in an effective quantity for cooling purposes within the coolant interval, but a ramped or pulsed supply of a liquid agent volume flow (Q) for the purpose of lubricating the clutch components is realized - at least temporarily - during this coolant interval for the purpose of lubricating the clutch components.

2. Method according to Claim 1, **characterized in that** the specific pulsed liquid agent volume flow (Q) in the coolant interval for the purpose of lubricating the components is dependent on various parameters, in particular on the pulse length, the pulse height and also the frequency and/or the current coolant temperature ("mechatronic oil temperature").

3. Method according to Claim 2, **characterized in that** the individual different parameters are stored in specific characteristic maps depending on the temperature of the coolant, in particular of a cooling oil (Tₒᵢₗ).

4. Method according to one of the preceding claims, **characterized in that** the coolant interval is realized between a time t₁ and a time t₅.

5. Method according to Claim 4, **characterized in that** at least one supply, preferably a plurality of ramped or pulsed supplies, of a liquid agent volume flow (Q) for the purpose of lubricating the components is/are realized between the time t₁ and the time t₅, specifically within the coolant interval.

6. Method according to one of the preceding claims, **characterized in that** a ramped or pulsed supply of liquid agent is performed between a time t₂ and a time t₄.

7. Method according to one of the preceding claims, **characterized in that**, in the case of a ramped and pulsed supply, the beginning of the starting ramp is defined by the time t₂ and the end of the supply of the maximum liquid volume flow (Q_{max pulse}) is defined by the time t₃.

8. Method according to one of the preceding claims, **characterized in that**, in case of a ramped pulse, the beginning of an end ramp is defined by the time t₃ and the end of the end ramp is defined by the time t₄.

9. Method according to one of the preceding claims, **characterized in that** the spacing (Δt_{P}), the height of the pulse (Q_{max pulse}) and also the gradient of the respective starting ramp or the end ramp are calculated and realized with the aid of a controller.

10. Method according to one of the preceding claims, **characterized in that**, with the aid of the controller, the friction outputs implemented in the clutch or in the clutches are continuously calculated and, depending on a summed total friction output minus the dissipated quantity of heat and depending on specific stored limit values, a coolant interval is realized, in particular is started and also ended, with the aid of the controller.

## Revendications

1. Procédé permettant de commander l'apport en agent de refroidissement à l'embrayage d'un véhicule à moteur comprenant une boîte de vitesses automatique, en particulier de commander l'apport en agent de refroidissement au double embrayage d'une boîte de vitesses automatique à double embrayage, dans lequel différents états de fonctionnement de la boîte de vitesses peuvent être commandés par l'intermédiaire d'un levier de vitesses, dans lequel le flux d'agent de refroidissement alimentant l'embrayage est interrompu temporairement au cours du fonctionnement du véhicule à moteur pour certains états de fonctionnement de la boîte de vitesses ou pour certains changements de rapport au sein de la boîte de vitesses de sorte qu'une pause d'apport en agent de refroidissement est réalisée, **caractérisé en ce que** l'apport en lubrifiant à l'embrayage est également réalisé, à savoir **en ce que** le refroidissement et la lubrification de l'embrayage sont effectués avec le même agent liquide, à savoir avec l'agent de refroidissement, en particulier une huile de refroidissement, issu d'un circuit d'agent de refroidissement unique, **en ce que**, lorsque le levier de vitesses se trouve dans la position destinée au frein de stationnement (P) ou dans la position neutre (N) et l'état de fonctionnement correspondant est établi au sein de la boîte de vitesses, lors duquel l'embrayage correspondant est ouvert, ou lorsque certains changements de rapport au sein de la boîte de vitesses sont réalisés et les actions de changement de rapport nécessaires à cet effet sont exécutées dans la boîte de vitesses, lors desquels l'embrayage correspondant est ouvert, une pause d'apport en agent de refroidissement est alors réalisée, au cours de laquelle l'embrayage ne reçoit aucun flux volumique d'agent liquide permettant le refroidissement en quantité efficace, mais reçoit au moins temporairement, pendant ladite pause d'apport en agent de refroidissement par un apport sous forme de rampe ou d'impulsion, un flux volumique d'agent liquide (Q) permettant la lubrification des éléments constitutifs de l'embrayage.

2. Procédé selon la revendication 1, **caractérisé en ce que** le flux volumique d'agent liquide (Q) au cours de la pause d'apport en agent de refroidissement permettant la lubrification des éléments constitutifs est fonction de différents paramètres, en particulier de la longueur d'impulsion, de la hauteur d'impulsion ainsi que de la fréquence et/ou de la température actuelle de l'agent de refroidissement ("température d'huile mécatronique").

3. Procédé selon la revendication 2, **caractérisé en ce que** les différents paramètres individuels sont stockés dans des champs caractéristiques spécifiques en fonction de la température de l'agent de refroidissement, en particulier d'une huile de refroidissement (T_{Öl}).

4. Procédé selon l'une quelconque des revendications précédentes, **caractérisé en ce que** la pause d'apport en agent de refroidissement est réalisée entre un instant t₁ et un instant t₅.

5. Procédé selon la revendication 4, **caractérisé en ce qu'**au moins un apport, de préférence plusieurs apports sous forme de rampes ou d'impulsions, d'un flux volumique d'agent liquide (Q) permettant la lubrification des éléments constitutifs, est/sont réalisé (s) entre l'instant t₁ et l'instant t₅, à savoir au cours de la phase d'apport en agent de refroidissement.

6. Procédé selon l'une quelconque des revendications précédentes, **caractérisé en ce qu'**un apport d'agent liquide sous forme de rampe ou d'impulsion est effectué entre un instant t₂ et un instant t₄.

7. Procédé selon l'une quelconque des revendications précédentes, **caractérisé en ce que**, lors d'un apport d'agent liquide sous forme de rampe et d'impulsion, le début de la rampe initiale est défini par l'instant t₂ et la fin de l'apport du flux volumique de liquide maximal (Q_{max impuls}) est définie par l'instant t₃.

8. Procédé selon l'une quelconque des revendications précédentes, **caractérisé en ce que**, pour une impulsion sous forme de rampe, le début d'une rampe finale est défini par l'instant t₃ et la fin de la rampe finale est définie par l'instant t₄.

9. Procédé selon l'une quelconque des revendications précédentes, **caractérisé en ce que** l'espacement (Δt_{P}), la hauteur de l'impulsion (Q_{max impuls}) ainsi que le gradient de la rampe initiale ou finale respective sont calculés et mis en oeuvre à l'aide d'un appareil de commande.

10. Procédé selon l'une quelconque des revendications précédentes, **caractérisé en ce que** les puissances de frottement s'exerçant dans l'embrayage ou les embrayages sont calculées à l'aide de l'appareil de commande et une pause d'apport en agent de refroidissement est réalisée, en particulier commencée et également terminée à l'aide de l'appareil de commande en fonction d'une puissance de frottement totale sommée, après soustraction de la quantité de chaleur dissipée, et en fonction de certaines valeurs limites stockées.
